Europäisches Patentamt

(19) European Patent Office

Office européen des brevets

(11) Numéro de publication: **0 122 999**
**B1**

(12) **FASCICULE DE BREVET EUROPEEN**

(45) Date de publication du fascicule du brevet:
17.09.86

(21) Numéro de dépôt: **83400777.5**

(22) Date de dépôt: **19.04.83**

(51) Int. Cl.⁴: **B 60 N 1/06**

(54) Tige d'articulation de siège à dossier inclinable et système de réglage de l'inclinaison comportant une telle tige.

(43) Date de publication de la demande:
**31.10.84 Bulletin 84/44**

(45) Mention de la délivrance du brevet:
**17.09.86 Bulletin 86/38**

(84) Etats contractants désignés:
**AT BE DE GB IT LU NL SE**

(56) Documents cités:
**AU - B - 430 464**
**AU - B - 503 334**
**FR - A - 2 285 829**
**FR - A - 2 427 509**
**FR - A - 2 515 583**

(73) Titulaire: **CYCLES PEUGEOT Société dite:, Beaulieu,**
**F-25700 Valentigney (FR)**

(72) Inventeur: **Fourrey, François, 34 Rue du Petit Chênois,**
**F-25200 Montbeliard (FR)**
Inventeur: **Mauffrey, Jean-François, 8 Rue du Stade,**
**F-90000 Andelnans (FR)**

(74) Mandataire: **Polus, Camille et al, c/o Cabinet**
**Lavoix 2, Place d'Estienne d'Orves, F-75441 Paris**
**Cedex 09 (FR)**

ACTORUM AG

**Description**

La présente invention concerne les sièges à dossier inclinable, et notamment les sièges de véhicules automobiles.

Il est maintenant classique de doter les sièges d'automobile de systèmes de réglage de l'inclinaison du dossier, constitués par deux dispositifs d'articulation montés entre le dossier et l'assise, de chaque côté du siège, et rendus solidaires l'un de l'autre par une tige à bouts carrés qui, d'un côté, à droite ou à gauche selon que le siège est destiné au conducteur ou au passager du véhicule, est fixée à un organe solidaire d'une poignée ou autre élément de commande.

La réalisation d'un système de ce type suppose l'utilisation d'un dispositif menant et d'un dispositif mené réalisés différemment, et la détermination préalable de la destination du siège. Par suite, les chaînes de montage d'usines d'automobiles doivent comporter une zone d'approvisionnement en sièges de droite et une autre en sièges de gauche.

La présente invention a pour but d'apporter une importante simplification en permettant la réalisation de sièges à dossier inclinable dont la commande puisse être placée, au choix, à droite ou à gauche, ou même être inversée.

Cette invention a en effet pour objet une tige d'articulation de siège qui est terminée par des bouts de section carrée, de solidarisation en rotation des dispositifs d'articulation, et caractérisée en ce que chaque bout carré est porté par une barre de prolongement de la tige munie, sur au moins deux faces opposées, de deux gorges transversales de réception d'une épingle élastique de blocage, et reliée au corps de la tige par une face radiale formant épaulement de butée, les deux barres étant symétriques par rapport au plan median transversal de la tige.

La tige ainsi réalisée est rigoureusement symétrique par rapport à son plan médian transversal et peut, par suite, être fixée à un organe d'entraînement à l'une ou l'autre de ses extrémités, selon la destination du siège.

L'invention s'étend également à un système de réglage de l'inclinaison du dossier d'un siège comportant deux dispositifs d'articulation opposés, rendus solidaires en rotation par une tige d'articulation, caractérisé en ce que les deux dispositifs d'articulation, étant symétriques et traversés chacun par un trou central, sont reliés par la tige d'articulation qui est décalée latéralement, de sorte que la barre de prolongement de l'une de ses extrémités est simplement emboîtée dans le trou central de l'un des dispositifs d'articulation, tandis que l'autre barre fait saillie à l'extérieur du second dispositif d'articulation et est enfilée dans un organe de commande qui est traversé par une épingle de blocage se logeant dans les gorges de la barre.

Selon un mode de réalisation préféré, l'organe de commande comporte un manchon de section interne carrée, qui s'emboîte sur la barre de prolongement de la tige et est percé de deux lumières latérales opposées, de passage des branches de l'épingle de blocage.

Les deux dispositifs d'articulation étant identiques et percés de trous qui les traversent complètement, tandis que la tige est prolongée par deux barres identiques, tous les sièges amenés à la chaîne de montage peuvent être semblables et former soit un siège de droite soit un siège de gauche, selon la position qui sera donnée à la tige et à la poignée de commande. Le choix du côté de montage de l'organe de commande peut ainsi être effectué non seulement en usine, lors du montage du siège, mais également à tout moment sur chaîne de montage du siège, sans qu'aucune modification des autres organes ne soit nécessaire.

La description ci-dessous d'un mode de réalisation donné à titre d'exemple non limitatif, et représenté sur les dessins annexés, fera d'ailleurs ressortir les avantages et caractéristiques de l'invention.

Sur ces dessins:

la figure 1 est une vue schématique en perspective d'un siège de véhicule automobile selon l'invention;

la figure 2 est une vue schématique, en coupe axiale, du système de réglage de l'inclinaison du dossier du siège de la figure 1;

la figure 3 est une vue éclatée de l'ensemble formé par la tige et l'organe de manoeuvre;

la figure 4 est une vue en élévation de l'organe de manoeuvre monté sur la tige.

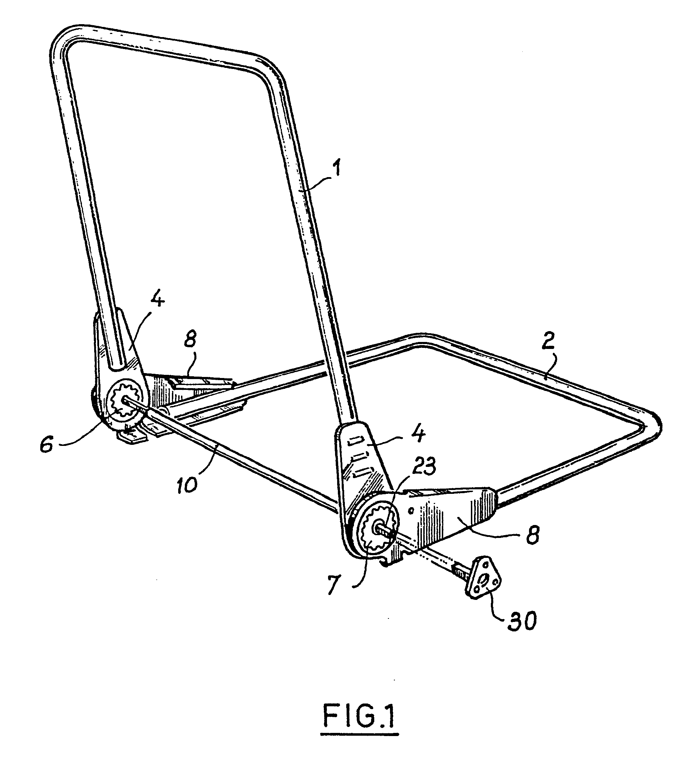

Sur la figure 1, un siège de véhicule automobile est représenté schématiquement sous la forme d'une armature de dossier 1 et d'une armature d'assise 2. L'armature du dossier 1 est fixée à chacune de ses extrémités sur un bras mobile 4 qui est relié, par un dispositif d'articulation 6 et 7, à un bras fixe 8 solidaire de l'armature d'assise 2.

Les deux dispositifs d'articulation 6 et 7 sont rendus solidaires l'un de l'autre par une tige 10.

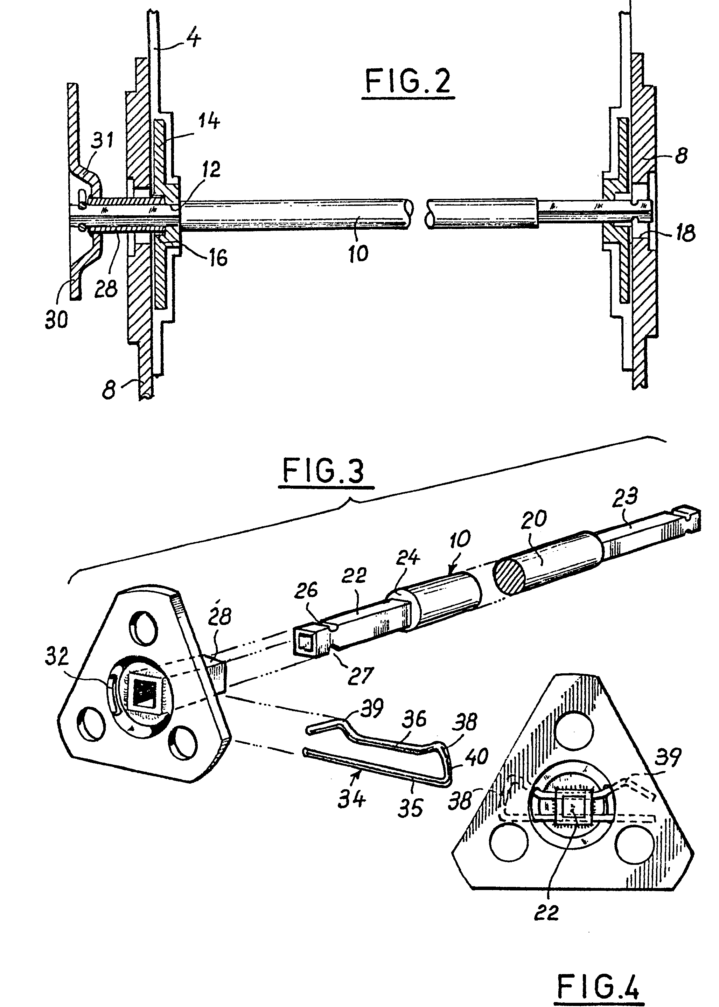

Selon l'invention, les dispositifs d'articulation 6 et 7 sont identiques et symétriques par rapport au plan médian du siège. Chacun d'eux est en outre percé d'un trou axial à gradins, s'élargissant depuis l'intérieur du siège en direction de l'extérieur. La partie la plus petite de ce trou, 12, est percée dans un organe 14 solidaire du bras mobile 4 (fig. 2) et est prolongée, dans ce même organe, par une partie 16 légèrement plus importante. Dans l'organe 8 un prolongement 18 du trou a une dimension interne encore plus importante et débouche à l'extérieur du dispositif. Au moins les trous 12 et 16 ont une section non circulaire, de préférence carrée.

La tige 10 de liaison de ces deux dispositifs comporte, comme le montrent plus particulièrement les figures 2 et 3, un corps ou partie centrale 20, de section circulaire, qui est prolongé par deux barres 22, 23, de section carrée et de moindre épaisseur, reliées à la partie cylindrique 20 par une face radiale de butée 24 formant un épaulement externe.

A chacune des extrémités libres des barres 22 et 23 sont formées au moins deux gorges 26, 27, parallèles, qui sont creusées transversalement dans les faces opposées de la barre correspondante 22, 23.

Lors de l'assemblage du siège, la tige 10 prolongée par les barres 22 et 23 est enfilée dans les trous centraux étroits 12 des deux dispositifs, mais est décalée latéralement par rapport à ceux-ci. L'une des barres 23 est en effet simplement enfilée partillement dans le trou 12 (à droite sur la fig. 2) de façon à ne pas dépasser à l'extérieur du dispositif d'articulation et notamment du bras fixe 8 de ce dispositif. Par contre l'autre barre, 22, est totalement introduite dans les trous successifs 12, 16, 18 et fait saillie à l'extérieur, l'épaulement 24 correspondant étant en appui sur l'organe 14 de l'articulation.

Sur cette barre en saillie 22 est enfilé un manchon 28, de section carrée, dont l'extrémité vient se loger dans le trou 16 de l'organe 14. L'autre extrémité de ce manchon est solidaire d'un organe de manoeuvre 30, qui, dans le mode de réalisation représenté, est constitué par une poignée tournante. De préférence la poignée 30 comporte un bossage central creux, 31, en saillie en direction du manchon 28, sur lequel ce manchon est fixé, et qui est percé de deux lumières opposées 32 situées chacune au droit d'une face latérale du manchon 28. Les branches 35, 36 d'une épingle élastique 34 sont enfilées dans les lumières 32 et l'emboîtent dans les gorges opposées 26 et 27 de la barre 22, de telle sorte qu'elles immobilisent axialement le manchon et l'organe de manoeuvre par rapport à la tige et, par suite, à l'organe 14.

Les deux branches 35 et 36 de l'épingle 34 comportent chacune une portion centrale rectiligne, mais tandis que la branche 35 est entièrement rectiligne, la branche 36 est coudée vers l'extérieur et forme deux saillies respectivement 38 et 39, l'une proche de la partie recourbée 40 de l'épingle, et l'autre proche de l'extrémité libre de cette dernière.

Comme le montre plus particulièrement la figure 4, lorsque l'épingle 34 est en place, les parties rectilignes sont logées dans les gorges 26, 27, tandis que les deux saillies 38 et 39 verrouillent l'épingle 34 dans les lumières 32 et interdisent toute sortie accidentelle de cette épingle, de sorte que l'organe de manoeuvre est rendu rigoureusement solidaire de la tige d'articulation 10 et de ses barres prolongement.

Etant donné que la barre 23 est exactement identique à la barre 22 et disposée symétriquement par rapport à celle-ci, et qu'en outre les deux dispositifs d'articulation sont semblables et symétriques, la tige 10 pourrait sans difficulté être décalée en sens inverse de celui représenté sur la figure 2 et faire saillie, comme le montre la figure 1, à l'extérieur du côté droit du siège. Dans ce cas l'organe de manoeuvre 30 est monté sur la barre 23 et une épingle de blocage 34 l'immobilise sur cette barre, tandis que la barre 22 est simplement introduite dans le trou 12 de l'autre dispositif d'articulation.

Par suite, lors de la fabrication, les armatures de dossier et d'assise peuvent être toutes munis de deux dispositifs d'articulation identiques et d'une tige 10 montée coulissante entre les dispositifs, quelle que soit la destination du siège. Le glissement de la tige d'articulation 10 et le montage de l'organe de manoeuvre 30 sont ensuite effectués à droite ou à gauche, selon la nécessité, sur une chaîne de montage qui ne reçoit plus qu'un seul type de siège, ce qui simplifie et accélère considérablement la fabrication.

En outre l'épingle 34 étant un organe élastique simplement enfilé dans les lumières 32 et les gorges 26 et 27, peut à tout moment être retirée pour permettre le démontage de l'organe de manoeuvre, puis être remise en place, par exemple du côté opposé, après déplacement de la tige 10 dans le trou ouvert 12, 18 correspondant si, pour une raison quelconque, l'on veut inverser la commande du siège.

On dispose ainsi d'un système qui comporte le maximum de pièces identiques susceptibles d'être montées les unes à la place des autres, ce qui permet une économie importante de fabrication et une réduction du nombre de pièces différentes stockées. Le montage est également considérablement simplifié.

## Revendications

1. Tige d'articulation (10) de siège de véhicule automobile terminée par des bouts de section carrée, caractérisée en ce que chaque bout carré est porté par une barre (22, 23) de prolongement de la tige, qui est munie sur deux faces opposées de gorges transversales (26, 27) de réception d'une épingle élastique de blocage (34) et qui est reliée au corps (20) de la tige par une face radiale (24) formant épaulement de butée, les deux barres (22, 23) étant symétriques par rapport au plan médian transversal de la tige.

2. Tige suivant la revendication 1, caractérisée en ce que les barres de prolongement (22, 23) sont séparées par le corps (20) de la tige, de section circulaire, qui a une longueur inférieure à la distance entre les deux articulations du siège.

3. Système de réglage de l'inclinaison d'un dossier de siège, et notamment de siège d'automobile, comportant deux dispositifs d'articulation (6, 7) opposés, rendus solidaires en rotation par une tige d'articulation (10), caractérisé en ce que le deux dispositifs d'articulation (6, 7) étant symétriques et traversés chacun par un trou central (12, 18) sont rendus solidaires par la tige (10) d'articulation selon l'une des revendications 1 et 2, qui est décalée latéralement, de sorte que l'une de ses barres (22 ou 23) de prolongement est simplement emboîtée dans le trou central du dispositif d'articulation correspondant, tandis que l'autre barre (23 ou 22) fait saillie à l'extérieur de l'autre dispositif d'articulation et est enfilée dans un organe de commande (28, 30) qui est traversé par une épingle de blocage (34) se logeant dans les gorges (26, 27) de la barre.

4. Système suivant la revendication 3, caractérisé en ce que l'organe de commande comporte un manchon (28), de section carrée, s'emboîtant sur la barre de prolongement (22, 23), et est percé de deux lumières (32) opposées, de passage des deux branches (35, 36) de l'épingle de blocage.

5. Système suivant l'une des revendications 3 et 4, caractérisé en ce que l'épingle de blocage (34) comporte deux branches (35, 36) de direction générale parallèle, dont l'une forme deux saillies (38, 39) dirigées vers l'extérieur et assurant le verrouillage dans les lumières (32) de l'organe de commande.

6. Système suivant l'une des revendications 3 à 5, caractérisé en ce que chaque dispositif d'articulation comporte un trou à gradins (12, 16, 18) dont la dimension croît progressivement de l'intérieur du siège vers l'extérieur.

7. Système suivant l'une des revendications 3 à 6, caractérisé en ce que l'organe de commande est une poignée (30) de rotation continue, qui comporte un bossage central creux (31) fixé au manchon (28) et traversé par les deux lumières opposées (32).

8. Système suivant l'une des revendications 3 à 6, caractérisé en ce que l'organe de commande est un levier pivotant.

## Patentansprüche

1. Anlenkstange (10) für den Sitz eines Kraftfahrzeugs, mit Enden mit quadratischem Querschnitt, dadurch gekennzeichnet, dass jedes der quadratischen Enden von einem Stangen-Verlängerungsstab (22, 23) gehalten ist, welcher mit zwei einander gegenüberliegenden Flächen mit quer verlaufenden Kehlen (26, 27) für die Aufnahme eines elastischen Verriegelungselementes (34) versehen und mit dem Körper (20) der Stange (10) über eine radiale, eine Anschlagschulter bildende Fläche (24) verbunden ist, wobei die beiden Stäbe (22, 23) in bezug auf die quer verlaufende Mittelebene symmetrisch sind.

2. Stange nach Anspruch 1, dadurch gekennzeichnet, dass die Verlängerungsstäbe (22, 23) durch den Körper (20) der Stange (10) voneinander getrennt sind, dessen Querschnitt kreisförmig und dessen Länge kürzer ist als der Abstand zwischen den beiden Sitzgelenken.

3. System zur Einstellung der Neigung einer Sitzrücklehne, insbesondere des Sitzes eines Kraftfahrzeugs, mit zwei einander gegenüber angeordneten Gelenkeinrichtungen (6, 7), welche drehfest mit einer Anlenkstange (10) verbunden sind, dadurch gekennzeichnet, dass die beiden Gelenkeinrichtungen (6, 7), welche symmetrisch sind und jeweils eine mittige Bohrung (12, 18) aufweisen, durch die Anlenkstange (10) gemäss einem der Ansprüche 1 und 2 fest miteinander verbunden sind, welche dergestalt zur Seite hin verschiebbar ist, dass einer ihrer Verlängerungsstäbe (22, 23) ohne weiteres in der mittigen Bohrung der entsprechenden Gelenkeinrichtung aufnehmbar ist, während der andere Stab (23, oder 22) nach aussen aus der anderen Gelenkeinrichtung hervorsteht und in ein Betätigungsorgan (28, 30) einführbar ist, durch welches sich ein Verriegelungselement (34) erstreckt, das in die Kehlen (26, 27) des Stabes eingreift.

4. System nach Anspruch 3, dadurch gekennzeichnet, dass das Betätigungsorgan eine Hülse (28) mit quadratischem Querschnitt aufweist, welche sich auf den Verlängerungsstab (22, 23) aufschiebt und von zwei einander gegenüber angeordneten Durchlässen (32) für die Hindurchführung zweier Arme (35, 36) des Verriegelungselementes unterbrochen ist.

5. System nach einem der Ansprüche 3 und 4, dadurch gekennzeichnet, dass das Verriegelungselement (34) zwei im wesentlichen parallel ausgerichtete Arme aufweist, von denen der eine zwei nach aussen gerichtete Ausbuchtungen aufweist, die die Verriegelung des Elements in den Durchlässen (32) des Betätigungsorgans sicherstellen.

6. System nach einem der Ansprüche 3 bis 5, dadurch gekennzeichnet, dass jede der Gelenkeinrichtungen eine Bohrung mit Stufen (12, 16, 18) aufweist, deren Dimensionierung vom Sitzinneren nach aussen hin zunimmt.

7. System nach einem der Ansprüche 3 bis 6, dadurch gekennzeichnet, dass das Betätigungsorgan ein kontinuierlich betätigbarer Drehgriff (30) ist, welcher eine mittige Aufwölbung (31) aufweist, die an der Hülse (28) befestigt ist und durch die die beiden einander gegenüber angeordneten Durchlässe (32) hindurchgehen.

8. System nach einem der Ansprüche 3 bis 6, dadurch gekennzeichnet, dass das Betätigungsorgan ein Schwenkhebel ist.

## Claims

1. A pivot rod (10) for an automobile vehicle seat structure terminating a square-section end portions, characterized in that each square end portion is carried by a bar (22, 23) extending the rod, which is provided on two opposed sides with transverse grooves (26, 27) for receiving an elastic locking pin (24) which is connected to the body (20) of the rod by a radical face (24) forming an abutment shoulder, the two bars (22, 23) being symmetrical relative to the median transverse plane of the rod.

2. A rod according to claim 1, characterized in that the extension bars (22, 23) are separated by the body (20) of the rod which has a circular section and a length less than the distance between the two pivots of the seat structure.

3. A system for adjusting the inclination of a backrest of a seat structure, and in particular an automobile seat structure, comprising two opposed pivot devices (6, 7) interconnected to rotate together by a pivot rod (1), characterized in that the two pivot devices (6, 7) are symmetriical and each has a central aperture (12, 18) extending therethrough, and are interconnected by the pivot rod (10) according to one of the claims 1 and 2, which is laterally offset so that one of its extension bars (22 or 23) is simply fitted into the central aperture of the corresponding pivot device, while the other bar (23 or 22) projects out of the other pivot device and is inserted in a control element (28, 30) which has extending therethrough a locking pin (24) which is engaged in the grooves (26, 27) of the bar.

4. A system according to claim 3, characterized in that the control element comprises a sleeve (28) of square section and fitted on the extension bar (22, 23) and provided with two opposed openings (32) for the passage of two branches (35, 36) of the locking pin.

5. A system according to one of the claims 3 and 4, characterized in that the locking pin (34) comprises two branches (35, 36) extending in generally parallel directions, one of which forms two outwardly extending projections (38, 39) ensuring the locking in the two openings (32) of the control element.

6. A system according to one of the claims 3 to 5, characterized in that each pivot device comprises an opening (12, 16, 18) having steps whose dimension progressively increases from the interior of the seat structure toward the exterior.

7. A system according to one of the claims 3 to 6, characterized in that the control element is a continuous rotation knob (30) which includes a hollow central boss (31) fixed to the sleeve (28) and having the two opposed openings (32) extending therethrough.

8. A system according to one of the claims 3 to 6, characterized in that the control element is a pivotal lever.

FIG.1

# FIG.2

# FIG.3

# FIG.4